# EUROPEAN PATENT APPLICATION

(11) **EP 2 051 518 A2**
(43) Date of publication of application: **22.04.2009**
(21) Application number: 08162851.3
(22) Date of filing: 22.08.2008
(51) Int. Cl.: H04N 5/92

(54) **Method and application for recording content and application corresponding to the content, and method and apparatus for reproducing the content**

(30) Priority: 15.10.2007 KR 20070103723
(71) Applicant: Samsung Electronics Co., Ltd., Seoul 442-742 (KR)
(72) Inventor: Kim, Kwang-hyuk, Yeongtong-gu, Suwon-si, Gyeonggi-do (KR); Oh, Keum-yong 1009-1202 Manhyeong Maeul Hyundai I-park,, Yongin-si, Gyeonngi-do (KR)
(74) Representative: Brandon, Paul Laurence

(57) **Abstract**

Provided is a method of recording content and an application for providing additional information on the content, the method including: receiving the content and an application corresponding to the content; and recording only the content or both the content and the application according to whether there is a part that the application and a previously received application share.

## Description

### CROSS-REFERENCE TO RELATED PATENT APPLICATIONS

This application claims the priority of Korean Patent Application No. 10-2007-0103723, filed on October 15, 2007, in the Korean Intellectual Property Office, the disclosure of which is incorporated herein in its entirety by reference.

### BACKGROUND OF THE INVENTION

### 1. Field of the Invention

Methods and apparatuses consistent with the present invention relate to recording and reproducing content, and more particularly, to methods and apparatuses for recording and reproducing content and applications corresponding to the content.

### 2. Description of the Related Art

Along with the introduction of digital televisions (TVs) and Internet protocol (IP) TVs, personal video recorders (PVRs) for recording/reproducing digital broadcasts by using embedded storage media such as hard disks have been released.

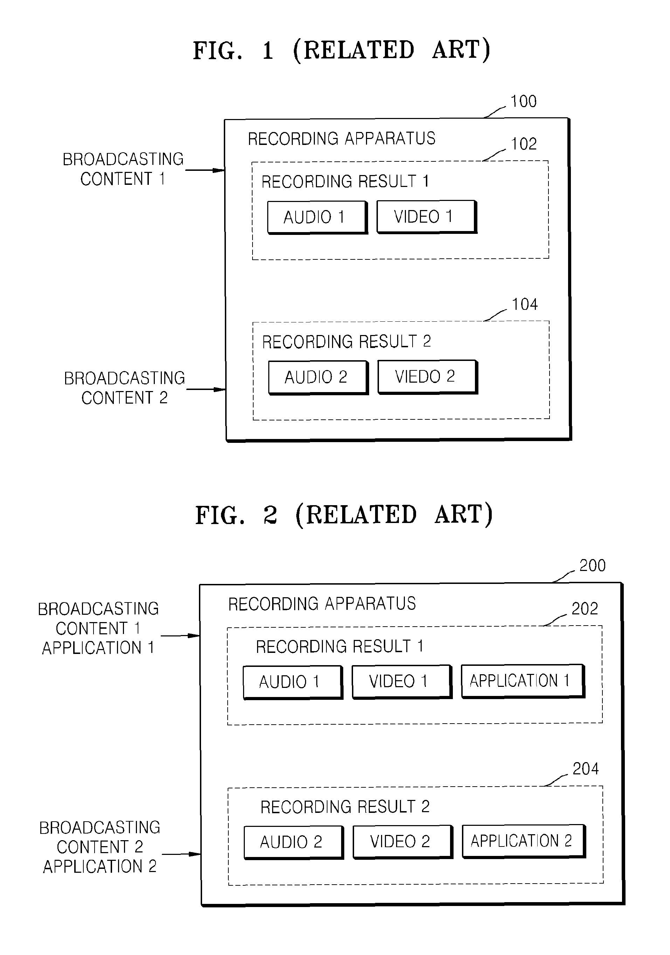

FIG. 1 is a view explaining a method by which a conventional PVR 100 records analog broadcasts. Referring to FIG. 1, a recording result 1 102, which is obtained by the conventional PVR 100 by receiving and recording broadcasting content 1, includes audio content 1 and video content 1 that are included in the broadcasting content 1. A recording result 2 104, which is obtained by the conventional PVR 100 by receiving and recording broadcasting content 2, includes audio content 2 and video content 2 that are included in the broadcasting content 2. The conventional PVR 100 selects one of the recording result 1 102 and the recording result 2 104 and reproduces the selected recording result.

FIG. 2 is a view explaining a method by which a conventional PVR 200 records digital broadcasts. Referring to FIG. 2, a recording result 1 202 and a recording result 2 204 are obtained by the conventional PVR 200 by receiving and recording broadcasting content 1 and an application 1, and broadcasting content 2 and an application 2, respectively.

In digital broadcasting, the conventional PVR 200 receives content and an application for providing additional information on the content. The application may be a program for providing a user interface that is used in connection with the broadcasting content received by the conventional PVR 200, information on characters appearing in the broadcasting content, or shopping information regarding one or more belongings of the characters.

The conventional PVR 200 records the broadcasting content 1 and the broadcasting content 2 and the applications 1 and 2 corresponding to the broadcasting content 1 and the broadcasting content 2, respectively, when recording a digital broadcast in an OpenCable Application Platform or a Multimedia Home Platform specification. Therefore, audio content 1 and video content 1, which are included in the broadcasting content 1, and the application 1 are recorded so as to produce the recording result 1 202. Audio content 2 and video content 2, which are included in the broadcasting content 2, and the application 2 are recorded so as to produce the recording result 2 204.

The conventional PVR 200 reproduces the audio content 1 or 2 and the video content 1 or 2 by using the application 1 or 2 in order to reproduce the recorded broadcasting content 1 or 2. For example, if the application 1 included in the recording result 1 202 is a program for providing a user interface, the conventional PVR 200 reproduces the audio content 1 and the video content 1 that are included in the recording result 1 202 by using the user interface.

Since the digital broadcasting content is reproduced by using an application relating to the digital broadcasting content, the digital broadcast can provide users with a bidirectional data service.

Meanwhile, the digital broadcasting content may be reproduced by using the same application. For example, the broadcasting content 2 may use the application 1 instead of the application 2. In this case, the conventional PVR 200 records the audio content 1 and the video content 1 that correspond to the broadcasting content 1 and the application 1, and records the audio content 2 and the video content 2 that correspond to the broadcasting content 2 and the application 1 in order to record the broadcasting content 1 and 2, respectively. That is, the application 1 is repeatedly recorded when the conventional PVR 200 records the broadcasting content 1 and 2.

Even when broadcasting content uses the same application, the conventional recording method repeatedly records the same application when recording each broadcasting content.

### SUMMARY OF THE INVENTION

Preferred embodiments of the present invention aim to provide a method and apparatus for recording content and an application relating to the content, and a method and apparatus for reproducing the content, in order to more effectively record and reproduce digital broadcasting content and an application corresponding to the digital broadcasting content.

According to an aspect of the present invention, there is provided a method of recording content and an application for providing additional information on the content, the method comprising: receiving the content and an application corresponding to the content; and recording only the content or both the content and the application according to whether there is a part that the application and a previously received application share.

Application information that explains about the application may be received along with the content and the application, wherein the application information includes recording control information used to control the recording of the application.

The recording control information may include information that defines parts of the application that are shared and that are not shared with another application, wherein the recording is performed according to the part of the application that is shared with another application based on the recording control information.

The recording control information may be information on a location in the application of data corresponding to the parts of the application that are shared and that are not shared with another application in a tree structure or a directory structure.

The recording control information may include one or more pieces of information on an identifier and a title of the content, if the content is one of a plurality of pieces of correlated content, information used to identify some pieces of content to which the application is applied from among the plurality of pieces of correlated content, and information on a version and an expiry date of the application.

The application information may be prepared by using one of three formats of text, mark-up language, and binary.

The recording may comprise: determining whether there is a part of the application that is shared with the previously received application, wherein the recording is performed according to the part of the application that is shared with the previously received application based on the determination.

Only the content may be recorded when the application is wholly shared with the previously received application.

The content and a part of the application that is not shared with the previously received application may be recorded when the application is partially shared with the previously received application.

According to another aspect of the present invention, there is provided a content reproducing method comprising: receiving content, an application used to provide additional information on the content, and application information including first information used to determine whether to store the application and second information explaining about the application; selectively storing the application based on the application information; and reproducing content by using the stored application if the content that uses the same application as the stored application is received.

The application information may further include third information indicating an expiry date of the stored application, wherein the stored application is removed after a predetermined period of time has passed based on the third information.

According to another aspect of the present invention, there is provided an apparatus for recording content and an application for providing additional information on the content, the apparatus comprising: a receiving unit receiving the content and an application corresponding to the content; and a recording unit recording only the content or both the content and the application according to whether there is a part that the application and a previously received application share.

According to another aspect of the present invention, there is provided a content reproducing apparatus comprising: a receiving unit receiving content, an application used to provide additional information on the content, and application information including first information used to determine whether to store the application and second information explaining about the application; a storing unit selectively storing the application based on the application information; and a reproducing unit reproducing content by using the stored application if the receiving unit receives the content that uses the same application as the stored application.

The application information may further include third information indicating an expiry date of the stored application, and wherein the apparatus further comprises: an application managing unit removing the stored application after a predetermined period of time has passed based on the third information.

According to another aspect of the present invention, there is provided a computer readable recording medium having embodied thereon a computer program for executing the method of recording content and an application for providing additional information on the content, the method comprising: receiving the content and an application corresponding to the content; and recording only the content or both the content and the application according to whether there is a part that the application and a previously received application share.

According to another aspect of the present invention, there is provided a computer readable recording medium having embodied thereon a computer program for executing the content reproducing method comprising: receiving content, an application used to provide additional information on the content, and application information including first information used to determine whether to store the application and second information explaining about the application; selectively storing the application based on the application information; and reproducing content by using the stored application if the content that uses the same application as the stored application is received.

### BRIEF DESCRIPTION OF THE DRAWINGS

The present invention will become more apparent by describing in detail exemplary embodiments thereof with reference to the attached drawings in which:

FIG. 1 is a diagram explaining a method by which a conventional personal video recorder (PVR) records analog broadcasts;

FIG. 2 is a diagram explaining a method by which a conventional PVR records digital broadcasts;

FIG. 3 is a block diagram of an apparatus for recording content and an application corresponding to the content according to an embodiment of the present invention;

FIG. 4 illustrates application information according to an embodiment of the present invention;

FIG. 5 illustrates recording control information according to an embodiment of the present invention;

FIG. 6 illustrates recording control information according to another embodiment of the present invention;

FIGS. 7 through 11 are diagrams for explaining the operation of a recording unit according to an embodiment of the present invention;

FIG. 12 is a flowchart illustrating a method of recording content and an application corresponding to the content according to an embodiment of the present invention;

FIG. 13 is a diagram for explaining a method of reproducing content recorded by using a recording method according to an embodiment of the present invention;

FIG. 14 is a block diagram of a content reproducing apparatus according to an embodiment of the present invention;

FIGS. 15 and 16 are diagrams for explaining the operation of a content reproducing apparatus according to an embodiment of the present invention;

FIG. 17 is a flowchart illustrating a content reproducing method according to an embodiment of the present invention.

### DETAILED DESCRIPTION OF THE INVENTION

The present invention will now be described more fully with reference to the accompanying drawings, in which exemplary embodiments of the invention are shown.

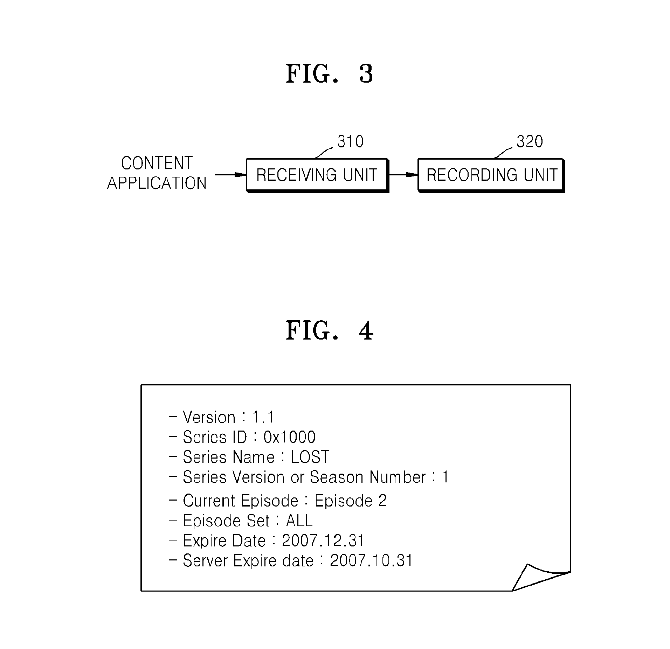

FIG. 3 is a block diagram of an apparatus for recording content and an application corresponding to the content according to an embodiment of the present invention. Referring to FIG. 3, the apparatus comprises a receiving unit 310 and a recording unit 320.

The receiving unit 310 receives the content and the application corresponding to the content.

The application, as described above, may be additional information on the content, or a program for providing the additional information on the content, or a program for providing an additional service relating to the content.

The content received by the receiving unit 310 may be related to previously received content. For example, if the previously received content is a first episode of a soap opera consisting of sixteen episodes, the content received by the receiving unit 310 may be a second episode. If the previously received content is related to one of a number of football games held in the UK, the content received by the receiving unit 310 may be related to another of the football games.

Since the contents received by the receiving unit 310 are related to each other, applications of the contents may be shared, i.e., may be the same. Even if the applications of the contents are not shared, the applications may be partially shared, i.e., may be partially the same.

Meanwhile, the receiving unit 310 may further receive application information that provides information about the received application. For example, the application information may include an application version, an expiry date of the application, and the like.

The application information may include recording control information used to control recording of the application. The recording control information may include an identifier and title for identifying the received application and content. If the received content is one of a plurality of pieces of contents that are correlated to each other, for example, if the received content is one of a plurality of pieces of contents of a soap opera consisting of a plurality of episodes, the recording control information may include information on which episode of the plurality of episodes uses the application, and information on an expiry date of the application.

The application information and the recording control information included therein will be described in detail later with reference to FIGS. 4 through 6.

The recording unit 320 records the received content only, or both the received content and application according to whether the application received by the receiving unit 310 and a previously received application are partially shared.

For example, if the current application received by the receiving unit 310 is wholly shared with the previously received application, the recording unit 320 records only the currently received content. The previously received application is an application that is received by the receiving unit 310 along with content, recorded by the recording unit 320 along with the content, and is stored in the recording apparatus of the present embodiment.

The recording apparatus of the present embodiment may further comprise a storage unit (not shown) for storing at least one of recording results and recorded applications.

If the current application received by the receiving unit 310 is partially shared with the previously received application, the recording unit 320 records the currently received content and a part of the currently received application that is not shared with the previously received application.

The recording unit 320 may record only the content or both the content and the application corresponding to the content based on the recording control information included in the application information that is received through the receiving unit 310.

However, the application information may not include the recording control information. In this regard, the recording unit 320 determines whether the application received through the receiving unit 310 and the previously received application are shared, and records only the content or both the content and the application corresponding to the content based on the determination.

In more detail, when the receiving unit 310 does not receive the application information or receives the application information that does not include the recording control information, the recording unit 320 analyzes the content and application and determines whether to record the application according to the analysis result.

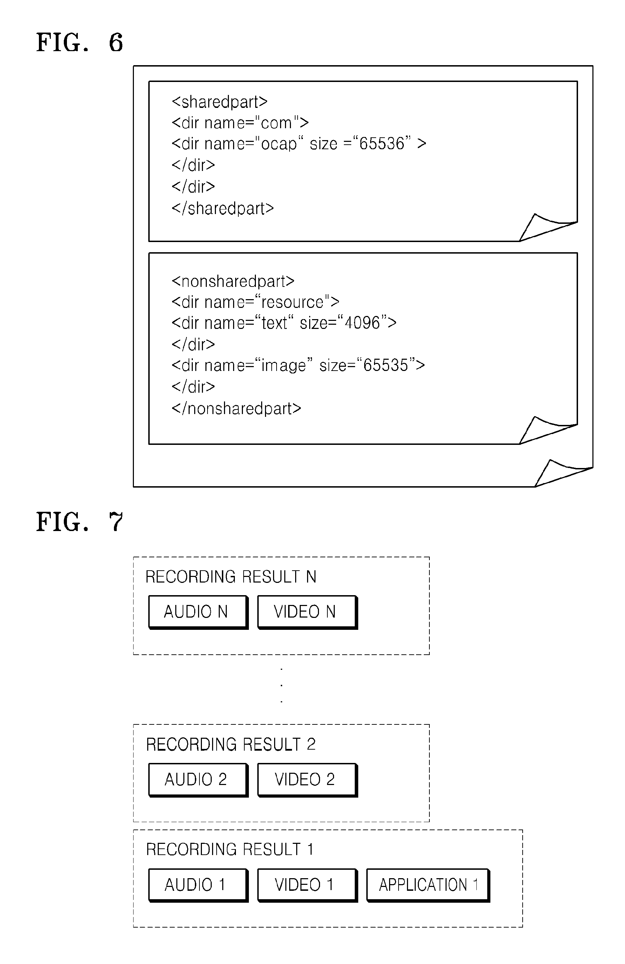

The detailed operation of the recording unit 320 will be described later with reference to FIGS. 7 through 9.

FIG. 4 illustrates application information according to an embodiment of the present invention. The application information is received through the receiving unit 310 when content and an application corresponding to the content are received.

Referring to FIG. 4, "Version" indicates a version of the application. The recording unit 320 can determine whether a currently received application and a previously received application are shared based on the "Version" information. For example, if the "Version" of the previously received application is 1.0, since the "Version" of the currently received application is 1.1, the recording unit 320 can determine that the currently received application is shared with the previously received application, except for a little difference caused by a version change of 0.1, i.e.g, the little difference between versions 1.0 and 1.1.

"Series ID" indicates an identifier of the content corresponding to the application, in which "Series" indicates one of contents in a series consisting of a plurality of episodes. The "Series ID" is the identifier identifying the contents in the series. For example, in the content having the application information shown in FIG. 4, "Series Name" is "LOST" and the "Series ID" of "LOST" is "0x1000". If the "Series Name" is "World Soccer", the "Series ID" of "World Soccer" can be determined as "0x2000".

"Series Version or Season Number" indicates a version or a season number of contents in series. For example, if "LOST" is produced yearly, a first produced series version or season number is 1, and a second produced series version or season number is 2. The series versions/season number enables the "Series ID" and the "Series Name" to more particularly identify the same content.

"Current Episode" indicates a number of an episode of which content is the content received along with the currently received application. Since the "Current Episode" is "Episode 2", the content is related to a second episode.

"Episode Set" indicates numbers of episodes of which contents are reproduced through a received application. Since the "Episode Set" is established as "ALL", the received application is used to reproduce contents of all episodes. If the "Episode Set" is established as "1-6", the received application is used to reproduce contents of first through sixth episodes.

"Expire Date" indicates a date when a received application expires. In the present invention, if an application that is previously received through the receiving unit 310 is recorded through the recording unit 320, and content that uses the shared application as the recorded application is received, the content is reproduced by using the recorded application. The recorded application is deleted after its expiry date has passed. If the "Expire Date" of December 31, 2007 has passed, the recorded application is deleted.

"Server Expire Date" indicates a date when an application is deleted from a server if the application is not completely received from the server by the date when the application is received from a Web server or Internet server, instead of from a broadcasting station. For example, since the "Server Expire Date" is October 31, 2007, if the application is not completely received from the server by the date, the application is deleted from the server. Therefore, if the application is going to be used after the "Server Expire Date", it is necessary to receive and store the application from the server before the "Server Expire Date".

The "Version", "Series ID", "Series Name", "Series Version or Season Number", "Current Episode", "Episode Set", "Expire Date", and "Server Expire Date" are included in the recording control information. The application information includes information on the application in addition to the recording control information.

The recording control information may include information on a location of data corresponding to a part that is shared by a currently received application and another application, and another part that is not shared by both applications, in the currently received application, in a tree or directory structure.

The information on the part that is shared by both applications is not totally new although both applications are different but the information additionally includes parts that are shared by both applications which are somewhat different.

For example, if an application A includes cast information of a third episode of a soap opera consisting of sixteen episodes, an application B corresponding to content of a fourth episode includes information on a new cast of the fourth episode in addition to the cast information included in the application A. The application B includes the cast information of the third episode included in the application A as a part that is shared by the applications A and B, and the information on the new cast of the fourth episode as a part that is not shared by the applications A and B.

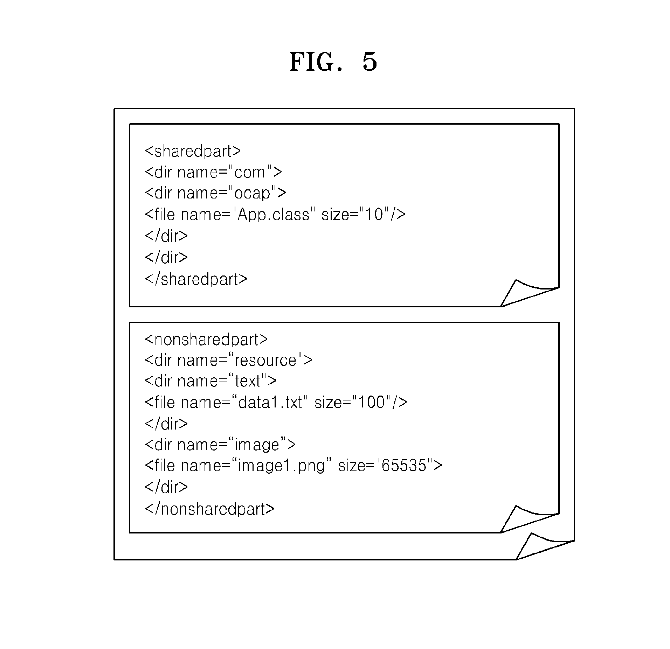

FIG. 5 illustrates recording control information according to an embodiment of the present invention. The recording control information is included in application information that is received along with an application.

Referring to FIG. 5, the recording control information indicates a location of data corresponding to a part that is shared by the application and a previously received application as a "sharedpart" in its upper end, and a location of data corresponding to a part that is not shared by both applications as a "nonsharedpart" in its lower end.

The application includes various pieces of data included in a plurality of directories. The data are indicated in the recording control information as parts that are shared and parts that are not shared, so that the recording unit 320 can determine which data is to be recorded among the data included in the application received through the receiving unit 310.

The "dir name" indicates a directory name. The "file name" indicates a file name. In the recording control information, the location of the data corresponding to the part that is shared by the application and the previously received application is a directory "com\ocap". The data corresponding to the part that is shared by the application and the previously received application is included in the directory "com\ocap" as a file name "App.class". The "size" next to the file name indicates the size of the data. If the data is recorded and stored in a storage unit, the "size" is used to check whether the data is properly stored in the storage unit.

In the lower end of the recording control information, locations of the data corresponding to the part that is not shared by both applications are directories "resource\text" and "image". The data corresponding to the part that is not shared by the application and the previously received application is included in the directories "resource\text" and "image" as file names "data1.txt" and "image1.png", respectively.

The "size" next to the file names is "100" and "65535", respectively.

If the receiving unit 310 receives the recording control information shown in FIG. 5, the recording unit 320 records the files "data1.txt" and "image1.png" that are the data corresponding to the part that is not shared by the application and the previously received application, based on the recording control information.

FIG. 6 illustrates recording control information according to another embodiment of the present invention. Referring to FIG. 6, the recording control information indicates a location of data corresponding to a part that is shared by two different applications or a part that is not shared by both applications but the recording control information does not indicate what the data is. In this case, the data corresponding to the part that is shared or not by both applications may be included in all files or a file in the corresponding directory. In more detail, if it is possible to identify the data corresponding to the part that is shared or not by both applications although a file name is not indicated, the recording control information may skip a file name of the data.

FIGS. 7 through 11 are diagrams for explaining the operation of the recording unit 320 according to an embodiment of the present invention.

FIG. 7 is a diagram for explaining an operation of the recording unit 320 when content 1 through content N and applications 1 through N corresponding to the content 1 through content N are sequentially received via the receiving unit 310 in which the application 1 is common to the applications 1 through N according to an embodiment of the present invention.

Referring to FIG. 7, a recording result 1 includes audio content 1, video content 1, and the application 1. A recording result 2 includes audio content 2 and video content 2. A recording result N includes audio content N and video content N. In more detail, the applications 2 through N corresponding to the content 2 through content N are not included in the recording result 2 through the recording result N, excluding the recording result 1.

If the recording unit 320 has recorded the application 1 when recording the content 1, the recording unit 320 does not record the application 1 when recording the content 2 through the content N but records audio content and video content of the content 2 through the content N.

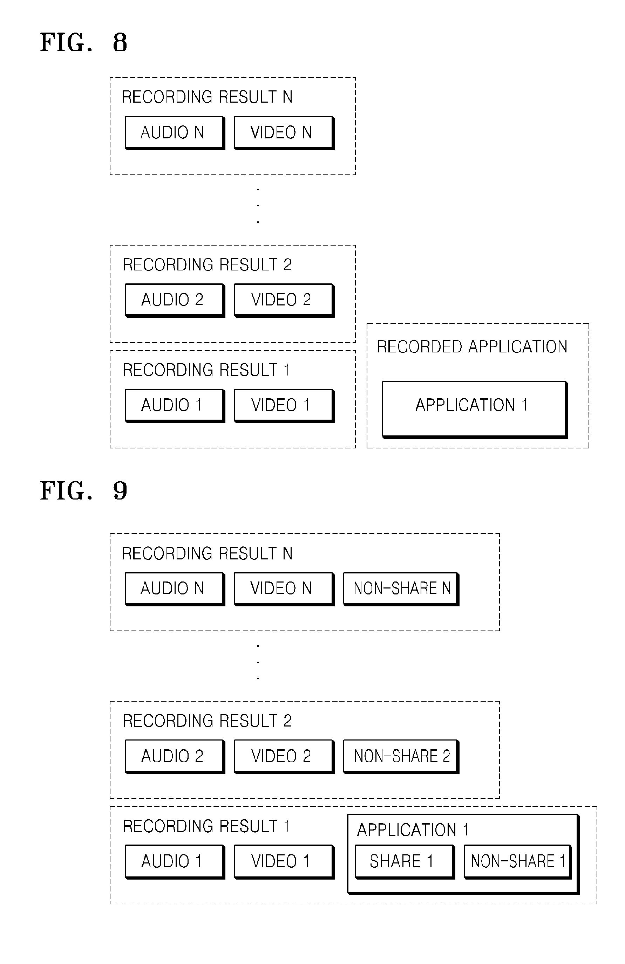

FIG. 8 is a diagram for explaining an operation of the recording unit 320 when content 1 through content N and applications 1 through N corresponding to the content 1 through content N are sequentially received via the receiving unit 310 in which the application 1 is common to the applications 1 through N according to another embodiment of the present invention.

Referring to FIG. 8, unlike the embodiment shown in FIG. 7, the application 1 is not included in a recording result 1 but is separately recorded. The separately recorded application 1 is used to reproduce the recording result 1 through recording result N.

FIG. 9 is a diagram for explaining an operation of the recording unit 320 when content 1 through content N and applications 1 through N corresponding to the content 1 through content N are sequentially received via the receiving unit 310 in which the applications 1 through N are partially shared according to an embodiment of the present invention.

Referring to FIG. 9, a recording result 1 includes audio content 1, video content 1, and the application 1. The application 1 includes a share 1 and a non-share 1. The share 1 is a part of the application 1 that is shared with the applications 2 through N. The non-share 1 is a part of the application 1 that is not shared with the applications 2 through N.

A recording result 2 includes audio content 2, video content 2, and a non-share 2. A recording result N includes audio content N, video content N, and a non-share N. In more detail, the applications 2 through N corresponding to the recording results 2 through N has the share 1, and the recording unit 320 records a non-share 2 through a non-share N of the applications 2 through N, respectively, excluding the share 1.

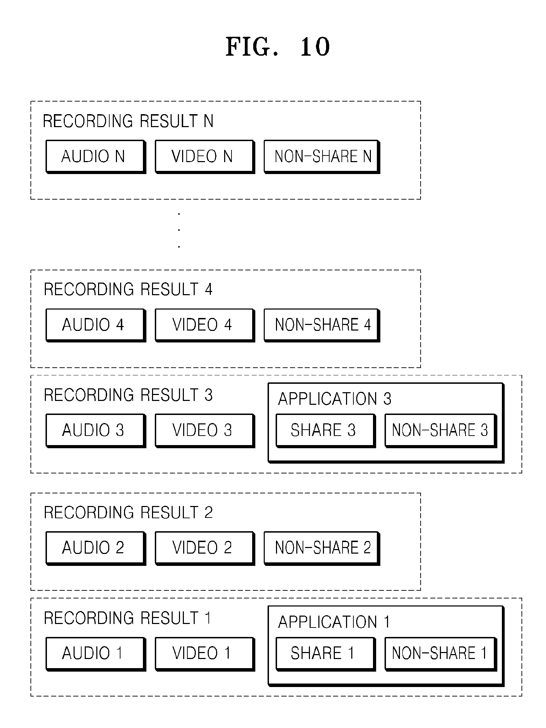

FIG. 10 is a diagram for explaining an operation of the recording unit 320 when content 1 through content N and applications 1 through N corresponding to the content 1 through content N are sequentially received via the receiving unit 310 in which the applications 1 through N are partially shared according to another embodiment of the present invention.

Referring to FIG. 10, a recording result 1 includes audio content 1, video content 1, and the application 1. The application 1 includes a share 1 and a non-share 1. A recording result 2 includes audio content 2, video content 2, and a non-share 2. That is, the recording result 2 includes the non-share 2 and content 2, excluding the share 1 that is shared with the applications 1 and 2.

Meanwhile, a recording result 3 includes audio content 3, video content 3, and an application 3. The application 3 is included in the recording result 3 since the application 3 corresponding to content 3 is not shared with the application 1 included in the recording result 1.

The application 3 includes a share 3 and a non-share 3. A recording result 4 includes audio content 4, video content 4, and a non-share 4. A recording result N includes audio content N, video content N, and a non-share N. That is, the recording results 4 through N include the non-shares 4 through N, excluding the share 3 that is shared with the applications 3 through N.

Whether the share 1 or 3 is a part that is shared with the applications 1 through N may be indicated in the recording control information or may be determined by the recording unit 320 using a previously received application and a currently received application.

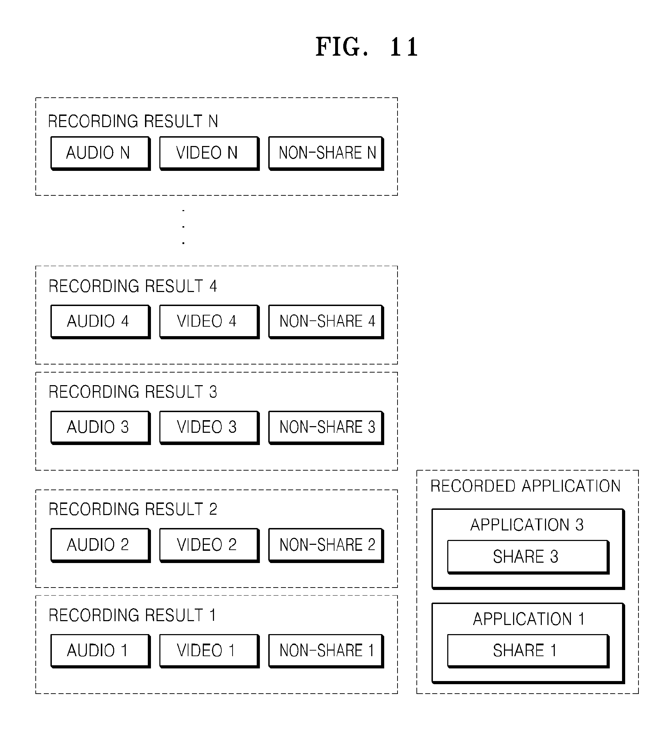

FIG. 11 is a diagram for explaining an operation of the recording unit 320 when content 1 through content N and applications 1 through N corresponding to the content 1 through content N are sequentially received via the receiving unit 310 in which the applications 1 through N are partially shared according to another embodiment of the present invention.

Referring to FIG. 11, unlike the embodiment shown in FIG. 10, a recording result 1 and a recording result 3 do not include the applications 1 and 3 but instead, include a non-share 1 and a non-share 3. A share 1 of the application 1 and a share 3 of the application 3 are separately recorded.

According to another embodiment, the recording unit 320 can record a share of an application separately from content corresponding to the application.

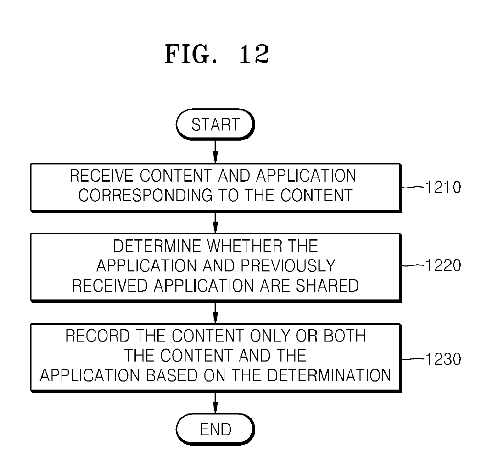

FIG. 12 is a flowchart illustrating a method of recording content and an application corresponding to the content according to an embodiment of the present invention. Referring to FIG. 12, in operation 1210, content and an application corresponding to the content are received.

Application information that includes information about the application may be received at the same time.

In operation 1220, it is determined whether the application and a previously received application are shared.

If the application information, including recording control information that defines parts that are shared and not shared by the application and the previously received application, is received in operation 1210, operation 1220 may be skipped.

In operation 1230, only the content is recorded or both the content and the application are recorded based on the determination.

If the application information including the recording control information is received in operation 1210, the recording unit 320 records only the content or both the content and the application.

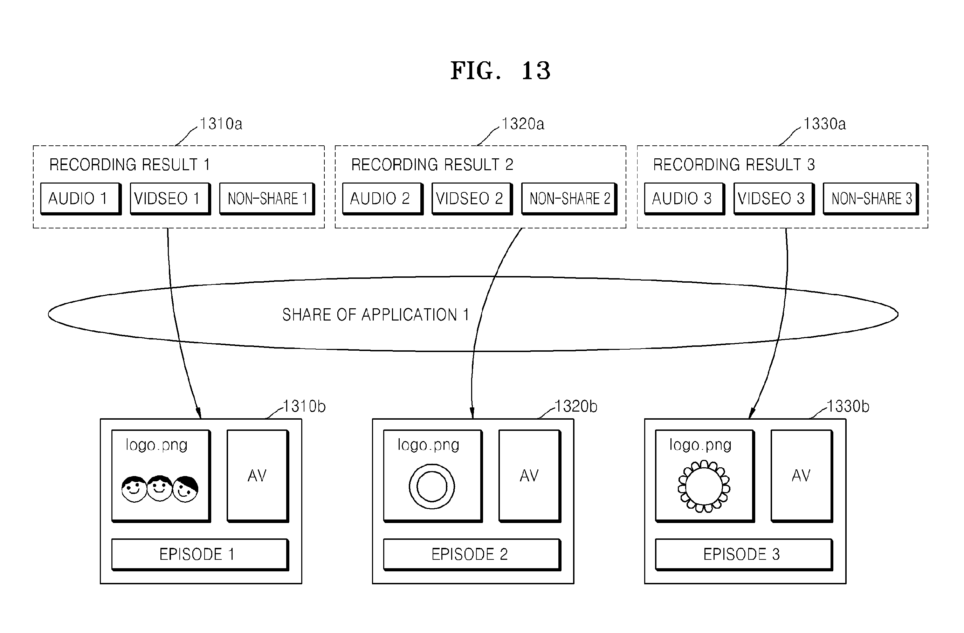

FIG. 13 is a diagram for explaining a method of reproducing content recorded by using a recording method according to an embodiment of the present invention. Referring to FIG. 13, three pieces of audio contents 1 though 3 and video contents 1 through 3 included in recording results 1 1310a through 3 1330a, respectively, are reproduced by using three non-shares 1 through 3 included in the recording results 1 1310a through 3 1330a, respectively, and a share of an application 1.

For example, with respect to the recording result 1 1310a, the audio content 1 and the video content 1 are reproduced by using the non-share 1 and the share of the application 1.

In a reproduction result 1310b of the recording result 1 1310a, the non-share 1 is reproduced as a logo picture "logo.png" and a subtitle "episode 1", and the audio content 1 and the video content 1 are reproduced as AV. That is, in the reproduction result 1310b of the recording result 1 1310a, the audio content 1 and the video content 1, except the logo picture "logo.png" and the subtitle "episode 1", are reproduced by using the share of the application 1.

Likewise, in a reproduction result 1320b of the recording result 2 1320a, a logo picture "logo.png" and a subtitle "episode 2" correspond to the non-share 2 of the recording result 2 1320a. In a reproduction result 1330b of the recording result 3 1330a, a logo picture "logo.png" and a subtitle "episode 3" correspond to the non-share 3 of the recording result 3 1330a.

The method of recording content and an application corresponding to the content has been described. Hereinafter a method of reproducing content by using the method will now be described.

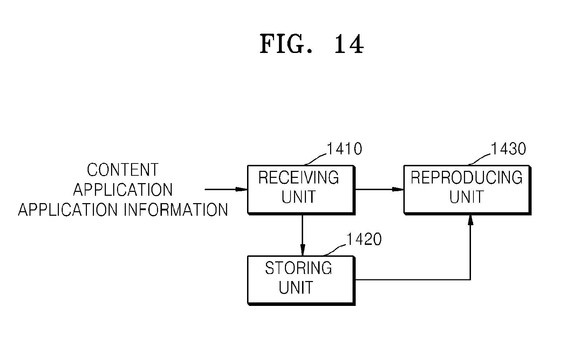

FIG. 14 is a block diagram of a content reproducing apparatus according to an embodiment of the present invention. Referring to FIG. 14, the content reproducing apparatus comprises a receiving unit 1410, a storing unit 1420, and a reproducing unit 1430.

The receiving unit 1410 receives content, an application for providing additional information on the content, and application information including information used to determine whether to store the application and information about the application.

The information used to determine whether to store the application may include information on whether the application received by the receiving unit 1410 will be continuously used, and, if the application will be continuously used, information on a period of time for which the application will be used.

For example, a soap opera A will be broadcasted through a channel 1 of a broadcasting station on every Monday and Tuesday for six months. The broadcasting station transmits content of the soap opera A and an application corresponding to the content to a user's TV along with application information indicating that the application will be used for six months. This method can also be applied to content of a talk show program, a sports program, and the like that are broadcasted on a regular basis.

If an application that is the same as the application transmitted to the user's TV has been previously stored in the user's TV, the application information may include information for reproducing the content by using the application, and information on an expiry date of the application.

If the application information includes the information on the expiry date of the application, the application stored in the user's TV is removed after the expiry date has passed. However, if the receiving unit 1410 receives application information including information on an extension of the expiry date of the application, the expiry date can be extended.

In an exemplary embodiment, the content reproducing apparatus of the present embodiment may further include an application managing unit (not shown) that removes an application whose expiry date has passed based on the application information.

The storing unit 1420 selectively stores the application received by the receiving unit 1410 based on the application information.

In more detail, if the application information includes the information indicating that the application received by the receiving unit 1410 will be continuously used, the storing unit 1420 stores the application.

However, an application that is the same as the application received by the receiving unit 1410 may be previously stored in the storing unit 1420. In this case, the storing unit 1420 does not store the application although the application information includes the information indicating that the application received by the receiving unit 1410 will be continuously used.

Meanwhile, the receiving unit 1410 may receive an application having a higher version than the application stored in the storing unit 1420. In this case, the application managing unit may update the application stored in the storing unit 1420 to the higher version application. In the present embodiment, the application is provided with a version thereof, thereby effectively updating the application.

The storing unit 1420 includes all storage media such as a hard disk, ROM, flash memory, and the like.

If the receiving unit 1410 receives content that uses an application that is the same as an application stored in the storing unit 1420, the reproducing unit 1430 reproduces the content by using the application stored in the storing unit 1420.

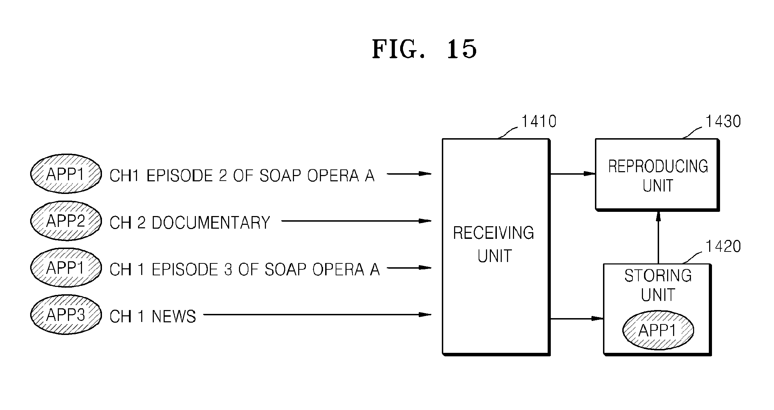

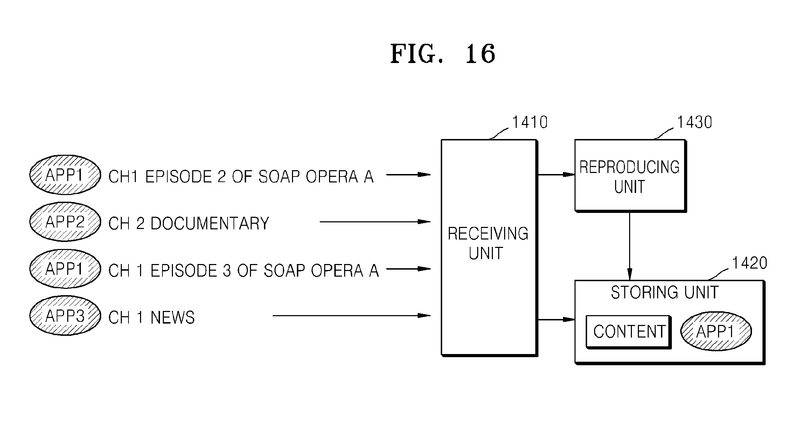

FIGS. 15 and 16 are diagrams for explaining the operation of the content reproducing apparatus according to an embodiment of the present invention.

FIG. 15 illustrates a process of the receiving unit 1410 that receives various pieces of content of channels 1 and 2 and applications corresponding the content, and the reproducing unit 1430 that reproduces the content by using the applications.

The reproducing unit 1430 reproduces the content by using the applications received by the receiving unit 1410 or an application 1 APP1 stored in the storing unit 1420 according to whether the content received by the receiving unit 1410 use the application 1 APP1 stored in the storing unit 1420.

Meanwhile, the receiving unit 1410 may receive application information when receiving the content and the applications corresponding to the content. The application information may include information used to determine whether to store the applications in the storing unit 1420 temporarily or for a long period of time. The application information may further include information on expiry dates of the applications. The applications stored in the storing unit 1420 will be removed after a predetermined period of time based on the information on expiry dates of the applications.

A method of reproducing content by using an application that is determined to be temporarily stored in the storing unit 1420 will now be described.

A user views an episode 2 of a soap drama A through a channel 1 of a TV, then views a documentary program through a channel 2 for a while, and again views the episode 2 of the soap drama A through the channel 1.

In this case, when the user views the episode 2 of the soap drama A through the channel 1, if an application 1 APP1 corresponding to content of the episode 2 has been temporarily stored in the storing unit 1420, the TV can reproduce the content of the episode 2 by using the application 1 APP1 without receiving the application 1 APP1 again in order to view the episode 2 again.

Therefore, if the user views content through a channel for more than a predetermined period of time, for example, for more than 10 minutes, the application information may include information indicating to temporarily store an application corresponding to the content in the storing unit 1420.

Hereinafter a method of reproducing content by using an application that is determined to be stored in the storing unit 1420 for a long period of time will now be described.

Referring to FIG. 16, content and an application 1 APP1 are stored in the storing unit 1420. For example, the content stored in the storing unit 1420 may be content of an episode 1 of a soap opera A broadcasted through a channel 1.

If the receiving unit 1410 receives content of episodes 2 and 3 of the soap opera A through the channel 1 that uses the application 1 APP1, the reproducing unit 1430 reproduces the content by using the application 1 APP1 stored in the storing unit 1220.

In this case, if the receiving unit 1410 identifies an application received with content to be the application 1 APP1, the receiving unit 1410 does not receive the application 1 APP1 but receives only the content.

When the receiving unit 1410 receives content of a documentary program through a channel 2 and an application 2 APP2 or content of news through the channel 1 and an application 3 APP3, the reproducing unit 1430 reproduces the content of the documentary program by using the application 2 APP2 and the content of the news by using the application 3 APP3. That is, the receiving unit 1410 receives the content and applications corresponding to the content, i.e., the applications 2 APP2 and 3 APP3.

Meanwhile, an application received by the receiving unit 1410 may be partially shared with the application 1 APP1 stored in the storing unit 1420. In this case, the receiving unit 1410 receives a part of the application received by the receiving unit 1410 that is not shared with the application 1 APP1 stored in the storing unit 1420. Furthermore, the reproducing unit 1430 reproduces content by using the part of the application received by the receiving unit 1410 that is not shared with the application 1 APP1 stored in the storing unit 1420.

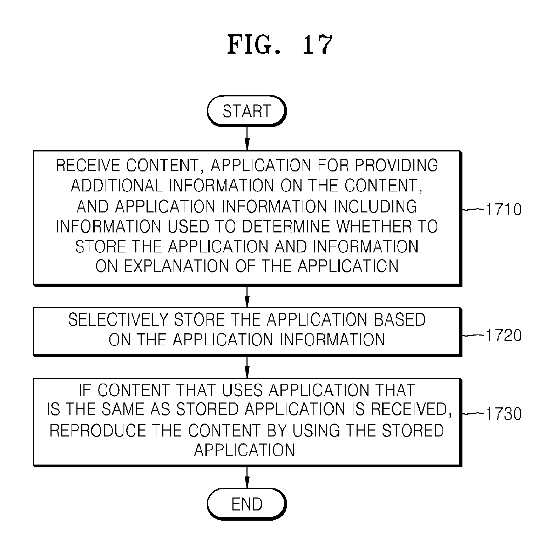

FIG. 17 is a flowchart illustrating a content reproducing method according to an embodiment of the present invention. Referring to FIG. 17, in operation 1710, content, an application for providing additional information on the content, and application information including information used to determine whether to store the application and information about the application are received.

In operation 1720, the application is selectively stored based on the application information.

In operation 1730, if content that uses an application that is the same as the stored application is received, the content is reproduced by using the stored application.

The embodiments according to the present invention can be embodied as a computer readable program, and realized in a general-purpose computer capable of executing the program via a computer readable recoding medium.

Examples of the computer readable recording medium include a magnetic storage medium, e.g., read-only memory (ROM), a floppy disk, and a hard disc; an optical recording medium, e.g., a CD-ROM, and a digital versatile disc (DVD). In another exemplary embodiment, the computer readable recording medium may include carrier waves (such as data transmission through the Internet).

The present invention receives content and an application corresponding to the content and records only the content or both the content and the application according to whether there is a common part between the application and a previously received application, thereby more effectively recording digital broadcasting content and an application corresponding to the digital broadcasting content.

Furthermore, the present invention receives content and an application for providing additional information on the content along with application information including information for determining whether to store the application and information about the application, selectively stores the application based on the application information, if content that uses the same application as the stored application is received, and reproduces the content by using the stored application, thereby more effectively reproducing digital broadcasting content and an application corresponding to the digital broadcasting content.

While this invention has been particularly shown and described with reference to exemplary embodiments thereof, it will be understood by those of ordinary skill in the art that various changes in form and details may be made therein without departing from the spirit and scope of the invention as defined by the appended claims. The exemplary embodiments should be considered in a descriptive sense only and not for purposes of limitation. Therefore, the scope of the invention is defined not by the detailed description of the invention but by the appended claims, and all differences within the scope will be construed as being included in the present invention.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of recording content and an application, the method comprising:
receiving the content and a current application corresponding to the content; and
recording only the content or both the content and the current application according to whether a part of the current application and a part of a previously received application that are the same.

2. The method of claim 1, wherein the receiving comprises receiving application information that explains about the application along with the content and the application, wherein the application information comprises recording control information and the recording is controlled based on the recording control information.

3. The method of claim 2, wherein the recording control information comprises information that defines the parts of the current and the previously received applications that are the same and parts of the current and the previously received applications that are not the same,
wherein the recording is performed according to the parts of the currently and the previously received applications that are the same.

4. The method of claim 3, wherein the recording control information further comprises first information on a location in the current application corresponding to the parts of the current and the previously received applications that are the same and second information on a location in the current application corresponding to the parts of the current and the previously received applications that are not the same, and wherein the first and the second information are each in a tree structure or a directory structure.

5. The method of any preceding claim, wherein the recording comprises:
determining, in a determination, whether there is the part of the current application that is the same as the part of the previously received application,
wherein the recording is performed based on the determination.

6. A content reproducing method comprising:
receiving a first content, a first application comprising first additional information on the first content, and the first application information used to determine whether to store the first application;
selectively storing the first application based on the first application information; and
reproducing a second content by using the stored first application if the second content is received and a second application of the second content is the same as the stored first application.

7. The method of claim 6, wherein the first application information further comprises an information on an expiry date of the stored first application.,
wherein the stored first application is removed after a predetermined period of time has passed, based on the information on an expiry date.

8. An apparatus for recording content and an application, the apparatus comprising:
a receiving unit (310) which receives the content and a current application corresponding to the content; and
a recording unit (320) which records only the content or both the content and the current application according to whether there is a part of the current application and a part of a previously received application that are the same.

9. The apparatus of claim 8, wherein the receiving unit (310) receives application information of the current application along with the content and the current application,
wherein the application information comprises recording control information, and
wherein the recording unit records based on the application information.

10. The apparatus of claim 9, wherein the recording control information comprises information that defines parts of the current application and the previously received application that are the same and parts of the current application and the previously received application that are not the same,
wherein the recording unit (310) records only the content or both the content and the current application based on the recording control information.

11. The apparatus of claim 8, wherein the recording unit (310) determines, in a determination, whether there is a part of the current application that is the same as a part of the previously received application, and records based on the determination.

12. The apparatus of claim 8, further comprising: a storing unit storing one or more of recording results and the recorded application.

13. A content reproducing apparatus comprising:
a receiving unit (1410) which receives a first content, a first application used to provide additional information on the first content, and the first application information used to determine whether to store the first application;
a storing unit (1420) which selectively stores the first application based on the first application information; and
a reproducing unit (1430) which reproduces a second content by using the stored first application if the receiving unit receives the second content and a second application of the second content is the same as the stored first application.

14. The apparatus of claim 13, wherein the first application information further comprises an information on an expiry date of the stored first application , and
wherein the apparatus further comprises an application managing unit removes the stored application after a predetermined period of time has passed based on the information on an expiry date.

15. A computer readable recording medium storing a program for executing the method of any one of claims 1-7.
